(19) **Europäisches Patentamt**
**European Patent Office**
**Office européen des brevets**

(11) **EP 3 846 088 A1**

(12) **EUROPEAN PATENT APPLICATION**

(43) Date of publication:
07.07.2021 Bulletin 2021/27

(21) Application number: 19220064.0

(22) Date of filing: 30.12.2019

(51) Int Cl.:
G06N 5/02 (2006.01)  G06N 20/00 (2019.01)
G06N 3/02 (2006.01)  G06N 3/08 (2006.01)
G06F 16/951 (2019.01)  G06F 40/143 (2020.01)
G06F 40/30 (2020.01)  G06F 40/51 (2020.01)
G06N 3/04 (2006.01)  G06N 3/00 (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME
KH MA MD TN**

(71) Applicant: **42 Maru Inc.**
**Seoul 08801 (KR)**

(72) Inventors:
- **Kim, Dong Hwan**
  **08801 Seoul (KR)**
- **Jeong, Woo Tae**
  **08801 Seoul (KR)**
- **Sung, Ki Bong**
  **08801 Seoul (KR)**

(74) Representative: **Stellbrink & Partner**
**Patentanwälte mbB**
**Widenmayerstrasse 10**
**80538 München (DE)**

(54) **METHOD AND APPARATUS OF GENERATING QUESTION-ANSWER LEARNING MODEL THROUGH REINFORCEMENT LEARNING**

(57) The present invention relates to a method of operating a question-answer model through reinforcement learning in an apparatus of generating an answer to a question. The method includes: sampling a latent variable from any passage by a first agent; extracting a question-answer dataset from the passage based on the latent variable; determining whether or not to apply the extracted question-answer dataset to learning of a question-answer model generating an answer to any question by a second agent; and applying a change value of performance of the question-answer model as a reward to the first agent and the second agent.

FIG 4

**Description**

BACKGROUND OF THE INVENTION

Field of the Invention

The present invention relates to a method and apparatus of generating a dataset for improving performance of a question-answer (QA) model generating an answer to a question. More specifically, the present invention relates to a method of extracting a question-answer pair from any context and extracting question-answer learning data so as to improve performance of a QA model by allowing the QA model to learn the question-answer pair.

Description of the Related Art

Due to the recent development of technology, various question-answer systems using deep learning technology have been developed. Recently, a system that gives an answer appropriate for a question using a question-answer (QA) model when a user gives a question in a natural language to the system has been demonstrated. However, since such a deep learning-based QA model requires a large amount of learning data, it could not but automatically give only answers for some specific fields or topics. Furthermore, there was a problem that it takes a significant amount of time and cost to construct learning data required for reliability of the QA model to arrive at a predetermined level or more.

Meanwhile, in a case of a recent question-answer learning model, performance is already significantly high because a preliminary training is performed using a language model objective or the like in a large amount of corpus. Therefore, even though more data are simply used for learning, performance of the question-answer model are not dramatically improved. Therefore, it is very important to secure efficient sample data in order to improve performance of machine learning.

SUMMARY OF THE INVENTION

An object of the present invention is to provide a method of efficiently extracting learning data of a question-answer (QA) model generating an answer to a question from any context. Further, an object of the present invention is to provide a method of generating a learning dataset capable of efficiently improving performance of a QA model by giving performance of an updated QA model as a reward to a model performing a function of extracting data on a question-answer pair.

Additionally, an object of the present invention is to provide a method and an apparatus of generating a question-answer generating model that simultaneously generates a question-answer dataset capable of being generated based on an input passage even though an answer candidate group is not provided unlike an existing question-answer (QA) model in which a user manually collects and learns a joint distribution of question-answer pairs, and a question-answer learning model capable of being automatically learned using the question-answer generating model.

According to an aspect of the present invention, a method of operating a question-answer model through reinforcement learning in an apparatus of generating an answer to a question may include: sampling a latent variable from any passage by a first agent; extracting a question-answer dataset from the passage based on the latent variable; determining whether or not to apply the extracted question-answer dataset to learning of a question-answer model generating an answer to any question by a second agent; and applying a change value of performance of the question-answer model as a reward to the first agent and the second agent.

Further, according to an aspect of the present invention, a method of generating a question-answer learning model through adversarial learning may include: sampling a latent variable based on constraints in an input passage; generating an answer based on the latent variable; generating a question based on the answer; and machine-learning the question-answer learning model using a dataset of the generated question and answer, wherein the constraints are controlled so that the latent variable is present in a data manifold while increasing a loss of the question-answer learning model.

The sampling of the latent variable may include: generating a hidden representation for each word in the input passage and storing the hidden representation in a memory; and sampling the latent variable based on the hidden representation.

The generating of the answer may include: calculating importance of the hidden representation stored in the memory through an attention that uses the sampled latent variable as a query to generate a weighted sum vector; and generating an answer span based on the latent variable and the weighted sum vector.

The input passage may structure infobox data extracted from data crawled from a website.

In a case where the infobox data is not extracted from the crawled data, a paragraph standardized based on a data frequency in a table recognized through column recognition may be input as the passage.

The input passage may be data for which machine translation is completed, and the method may further include evaluating a quality of the machine translation by evaluating accuracy of an answer based on a dataset of the generated question and the answer.

According to another aspect of the present invention, an apparatus of generating a question-answer learning model through adversarial learning may include: one or more processors; and one or more memories in which instructions, when executed by the one or more processors, causing the one or more processors to perform an operation are stored, wherein the operation performed by the one or more processors includes: an operation of sampling a latent variable based on constraints in an input passage; an operation of generating an answer based on the latent variable; an operation of generating a question based on the answer; and an operation of machine-learning the question-answer learning model using a dataset of the generated question and answer.

The constraints may be controlled so that the latent variable is present in a data manifold while increasing a loss of the question-answer learning model.

The operation of sampling the latent variable may include: an operation of generating a hidden representation for each word in the input passage and storing the hidden representation in a memory; and an operation of sampling the latent variable based on the hidden representation.

The operation of generating the answer may include: an operation of calculating importance of the hidden representation stored in the memory through an attention that uses the sampled latent variable as a query to generate a weighted sum vector; and an operation of generating an answer span based on the latent variable and the weighted sum vector.

According to another exemplary embodiment, a program stored in a medium in order to execute generation of a question-answer dataset based on a passage input in combination with a computer which is hardware is provided.

Detailed contents of other exemplary embodiments of the present invention are described in a detailed description and are illustrated in the accompanying drawings.

## BRIEF DESCRIPTION OF THE DRAWINGS

FIG. 1A is a conceptual diagram for schematically describing a machining learning question-answer learning model according to an exemplary embodiment.

FIG. 1B is a conceptual diagram for schematically describing a question-answer learning model through adversarial learning according to an exemplary embodiment.

FIG. 2 is a view for describing a method of improving performance of a question-answer model according to an exemplary embodiment.

FIG. 3A is a flowchart for describing a method of extracting a question-answer dataset from a passage and learning a QA model.

FIG. 3B is a flowchart for describing a method of generating a question-answer dataset based on a passage input according to an exemplary embodiment.

FIG. 4 is a conceptual diagram for schematically describing a question-answer dataset generating model based on a passage input.

FIG. 5 is a view for describing an example of a method of generating a question-answer dataset in a paragraph according to an exemplary embodiment.

FIG. 6 is a view for describing a method of generating a question-answer dataset in a standardized infobox according to an exemplary embodiment.

FIG. 7 is a view for describing a method of generating a question-answer dataset in a non-standardized page according to an exemplary embodiment.

FIG. 8 is a block diagram schematically illustrating an internal configuration of an apparatus of generating a question-answer dataset according to an exemplary embodiment.

## DETAILED DESCRIPTION OF THE PREFERRED EMBODIMENTS

This work was supported by Institute of Information & communications Technology Planning & Evaluation (IITP) grant funded by the Korea government (MSIT) (No.2019-0-01410, Research & Development of Question Generation for Deep Learning based Semantic Search Domain Extension)

Various advantages and features of the present invention and methods accomplishing them will become apparent from the following description of exemplary embodiments with reference to the accompanying drawings. However, the present invention is not limited to exemplary embodiments to be described below, but may be implemented in various different forms, these exemplary embodiments will be provided only in order to make the present invention complete and allow those skilled in the art to completely recognize the scope of the present invention, and the present invention will be defined by the scope of the claims.

Terms used in the present disclosure are for describing exemplary embodiments rather than limiting the present invention. In the present disclosure, a singular form includes a plural form unless explicitly stated otherwise. Terms "comprise" and/or "comprising" used in the present disclosure do not exclude the existence or addition of one or more other components other than the mentioned components. Throughout the present disclosure,the same components will be denoted by the same reference numerals, and a term "and/or" includes each and all combinations of one or more of the mentioned components. Terms "first", "second" and the like are used to describe various components, but these components are not limited by these terms. These terms are used only in order to distinguish one component from another component. Therefore, a first component mentioned below may be a second component within the technical spirit of the present invention.

Unless defined otherwise, all terms (including technical and scientific terms) used in the present disclosure have the same meaning as meanings commonly understood by those skilled in the art to which the present invention pertains. In addition, terms defined in generally used dictionaries are not ideally or excessively interpreted unless they are specifically defined clearly.

Spatially relative terms "below", "beneath", "lower", "above", "upper", and the like, may be used in order to easily describe correlations between one component and other components. The spatially relative terms are to be understood as terms including different directions of the components at the time of use or at the time of operation in addition to directions illustrated in the drawings. For example, in a case of overturning component illustrated in the drawings, a component described as "below" or "beneath" another component may be placed "above" the other component. Therefore, an exemplary term "below" may encompass both of directions of above and below. Components may be oriented in other directions as well, and thus, spatially relative terms may be interpreted according to orientations.

Hereinafter, exemplary embodiments of the present invention will be described in detail with reference to the accompanying drawings.

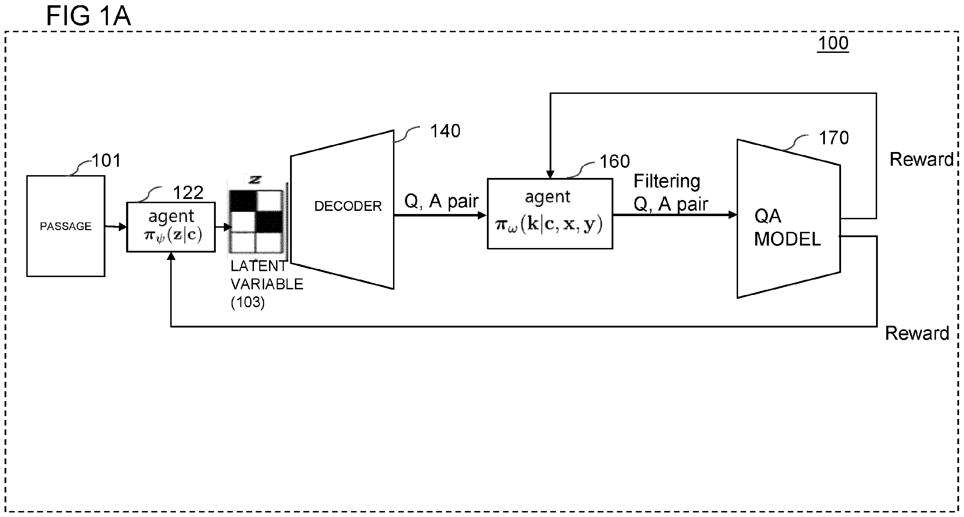

FIG. 1A is a conceptual diagram for schematically describing a question-answer learning model through machining learning according to an exemplary embodiment.

Referring to FIG. 1A, a question-answer learning model 100 using reinforcement learning according to an exemplary embodiment of the present invention may include a decoder 140 performing a function of extracting a question-answer dataset from a passage, a question-answer (QA) model 170 performing a function of providing an answer to any question, a first agent 122 extracting a latent variable from the passage, and a second agent 160 determining whether or not to apply the question-answer dataset extracted from the passage to the QA model 170.

More specifically, when the passage 101 is input, the first agent 122 may generate the latent variable 103 from contexts of the passage. The latent variable 103 includes a variable generated by processing the contexts included in the passage 101 to represent the contexts in a vector form.

When the latent variable 103 is input to the decoder 140, the decoder 140 may generate the question-answer dataset based on the latent variable 103.

The second agent 160 may determine whether or not to apply the generated question-answer dataset to the learning of the QA model 170.

There are two problems in using question-answer pairs, that is, QA pairs, generated by the decoder 140 directly for the learning of the QA model 170. First, since most of the generated QA pairs are similar to data already learned by the QA model, when the generated QA pairs are added and the QA model 170 is learned, there is a risk of overfitting. Second, since a noise exists in the QA pairs, if the noise is not refined, there is a risk that performance of the QA model will be deteriorated.

Therefore, according to an exemplary embodiment of the present invention, the second agent 160 may determine whether or not to apply the QA pair generated by the decoder 140 to the learning of the QA model 170. That is, according to an exemplary embodiment of the present invention, since the second agent filters the remaining data as noise except for the QA pair capable of improving the performance of the QA model, the problem for the noise described above may be solved.

Furthermore, according to an exemplary embodiment of the present invention, the first agent 122 corresponds to a machine learning model that performs learning so as to generate the latent variable helping to learn the QA model rather than to generate the latent variable from the context according to a predefined rule. Therefore, as the first agent forms a latent variable space capable of improving the performance of the QA model, the problem of the overfitting described above may thus be solved.

Thereafter, the QA model 170 may be updated by learning a QA pair provided by the second agent 160.

Meanwhile, according to an exemplary embodiment of the present invention, the first agent 122 is a machine learning model that performs a function of processing the contexts included in any passage 101 to represent the contexts in the vector form, thereby generating the latent variable 103. Further, the second agent 160 is a machine learning model of performing a function of determining whether or not to apply the generated question-answer dataset to the learning of the QA model 170.

That is, since the first agent generates the latent variable from the passage in order to generate the QA pair required for the learning of the QA model and the second agent determines whether or not to apply the generated QA pair to the learning of the QA model 170, performance of the first agent 122 and performance of the second agent 160 are directly related to the performance of the QA model 170.

Therefore, the question-answer learning model 100 according to an exemplary embodiment of the present invention has a feature of reinforcement-learning the first agent model and the second agent model by giving performance of an updated QA model as a reward to the first agent model 122 and the second agent model 160 in order to organically improve the performance of the first agent model 122, the performance of the second agent model 160, and the performance of the QA model 170. Therefore, the question-answer learning model 100 has an effect of generating the learning dataset effectively improving the performance of the QA model 170.

Again referring to FIG. 1A, the question-answer learning model 100 based on the reinforcement learning described above may have an objective function of the following Equation 1:

[Equation 1]

$$
\mathcal{L}_{\text{CVAE}} := \sum_{\mathbf{z}} q_\phi(\mathbf{z}|\mathbf{x}, \mathbf{y}, \mathbf{c}) \log \frac{p_\theta(\mathbf{x}, \mathbf{y}, \mathbf{z}|\mathbf{c})}{q_\phi(\mathbf{z}|\mathbf{x}, \mathbf{y}, \mathbf{c})}
$$
$$
= \mathbb{E}_{\mathbf{z} \sim q_\phi(\mathbf{z}|\mathbf{x}, \mathbf{y}, \mathbf{c})} \left[ \log p_\theta(\mathbf{x}, \mathbf{y}|\mathbf{z}, \mathbf{c}) \right] - \text{KL} \left[ q_\phi(\mathbf{z}|\mathbf{x}, \mathbf{y}, \mathbf{c}) \| p_\theta(\mathbf{z}|\mathbf{c}) \right]
$$

.

Here x, y, c, and z correspond to a question, an answer, a context of a passage, and a latent variable, respectively. Parameters $\theta, \phi$ maximizing the objective function $\mathcal{L}_{\text{CVAE}}$ may be estimated using x, y, c, and z.

The objective function of Equation 1 is to learn a model capable of generating a QA pair, and is not directly related to reinforcement learning of the question-answer learning model 100. The reinforcement learning is to improve the performance of the first agent model 122 and the performance of the second agent 160.

The first agent model and the second agent model of FIG. 1A may have an objective function of the following Equation 2:

[Equation 2]

$$
\mathcal{L}(\psi, \omega) = (\text{F1 score}) \times \left[ \log \pi_\psi(\mathbf{z}|\mathbf{c}) + \log \pi_\omega(\mathbf{k}|\mathbf{c}, \mathbf{x}, \mathbf{y}) \right]
$$

Here, F1 score means performance or accuracy of a QA model, and corresponds to a value calculated for how accurately the QA model can extract an answer to any question. According to Equation 2, the performance of the QA model is applied as reward to the learning of the first agent and the second agent, and the first agent and the second agent will thus be learned so that the performance of the QA model is improved. That is, the first agent will be learned to extract the latent variable capable of improving the performance of the QA model from the passage, and the second agent will be learned to filter the remaining noise except for the dataset capable of improving the performance of the QA model among the QA pairs generated by the decoder.

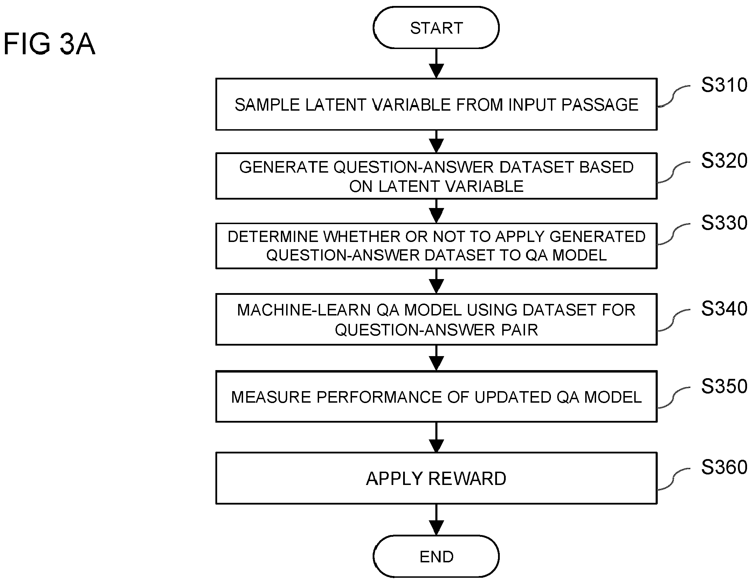

FIG. 3A is a flowchart for describing a method of extracting a question-answer dataset from the passage and learning the QA model in the question-answer learning model 100 of FIG. 1A.

In step 310, the question-answer learning model may sample a latent variable from any passage. In order to sample the latent variable, the question-answer learning model may process the contexts included in the passage to represent the contexts in the vector form.

Then, the question-answer learning model may generate the question-answer dataset, that is, the QA pair based on the latent variable extracted from the passage (step 320). The generated QA pair may be used as learning data for updating the QA model performing a function of generating an answer to any question.

Meanwhile, the question-answer learning model may determine whether or not to apply the generated question-answer dataset, that is, the QA pair, to the learning of the QA model (step 330).

Then, the QA model may be updated by learning the QA pair (step 340).

Then, the question-answer learning model may measure performance of the updated QA model (step 350) and apply the measured performance as a reward to step 310 and step 330 (step 360). Therefore, the first agent model performing the sampling of the latent variable will be updated so that the performance of the QA model is improved, and the second agent determining whether or not to apply the QA pair to the QA model will also be updated so that the performance of the QA model is improved.

Meanwhile, although not separately illustrated in FIG. 3A, step 360 may not be performed in a case where the performance of the QA model measured in step 350 is saturated in spite of continuous learning of the QA pair such that a change range of the performance is small or the performance of the QA model exceeds a preset range. The former is because the learning of the QA pair no longer helps to improve the performance of the QA model, and the latter is because the performance of the QA model is sufficient so that the learning of the QA pair is not necessary.

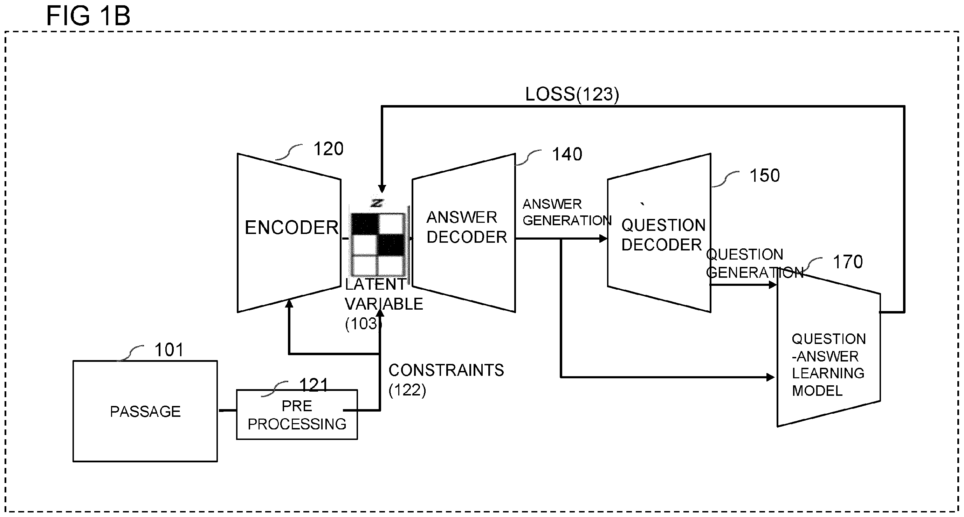

Meanwhile, FIG. 1B is a conceptual diagram for schematically describing a question-answer learning model through adversarial learning according to an additional exemplary embodiment of the present invention.

Referring to FIG. 1B, a question-answer learning model using adversarial learning according to an exemplary embodiment may include an encoder 120, an answer decoder 140, a question decoder 150, and a question-answer learning model 170.

First, when a passage 101 is input, the question-answer learning model generates a latent variable 103 in the encoder 120 with reference to constraints 122 of a preprocessing step 121.

When the generated latent variable 103 is input to the answer decoder 140, the answer decoder 140 generates an answer based on the latent variable 103. Next, when the generated answer is input to the question decoder 150, the question decoder 150 generates a question paired with the answer.

In addition, the question-answer learning model 170 inputs a pair of the question and the answer each generated by the answer decoder 140 and the question decoder 150 to learn a question-answer learning model.

However, as question-answer pairs are automatically generated through the question-answer dataset generating model generated by the answer decoder 140 and the question decoder 150 according to an exemplary embodiment, it may already be guessed by the question-answer learning model, and therefore, they may not be very helpful. Therefore, a method for improving performance of machine-learning is required.

Therefore, a method of generating a question-answer dataset that cannot be guessed by a current question-answer learning model through adversarial learning is disclosed.

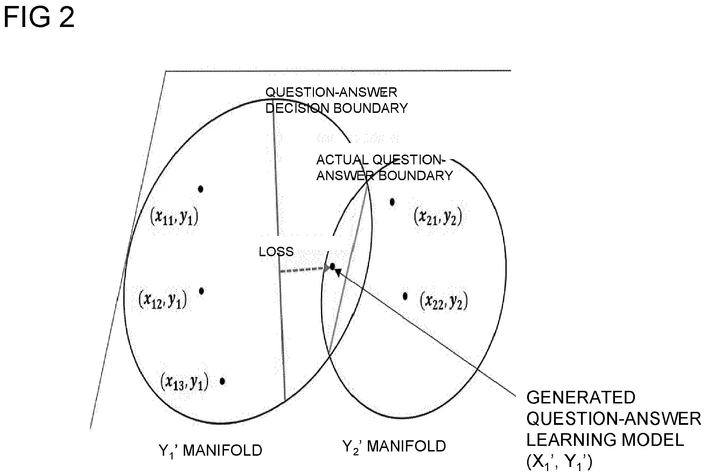

More specifically, FIG. 2 is a view for describing a method of improving performance of a question-answer model through adversarial learning according to an exemplary embodiment.

Referring to FIG. 2, in order to perform adversarial learning, data present in a data manifold while being outside a decision boundary of the current question-answer model need to be sampled. Specifically, the method of generating a question-answer dataset based on a passage input according to an exemplary embodiment selects the latent variable through the encoder, and a question-answer data pair generated from the sampled latent variable needs to be a question-answer data pair whose correct answer cannot be guessed through a question-answer learning model. In this case, the question-answer learning model calibrates a decision boundary by learning the question-answer data pair whose correct answer could not be guessed, and when such a process is repeated, the decision boundary of the question-answer learning model may become close to a true decision boundary, and performs of the question-answer learning model may also be improved.

Meanwhile, a question-answer dataset for the adversarial learning may be determined by adjusting a loss of the question-answer learning model and constraints for positioning the question-answer data set in the data manifold.

Again referring to FIG. 1, the question-answer learning model in the adversarial manner described above may have an objective function of the following Equation 1 :

[Equation 3]

$$\min_{\omega} \max_{\pi} \quad \mathbb{E}_{\mathbf{x},\mathbf{y},\mathbf{c}\sim p(\mathbf{x},\mathbf{y},\mathbf{c})}[\mathcal{L}_{\omega}(\mathbf{x},\mathbf{y},\mathbf{c})] + \mathbb{E}_{\mathbf{c}_u \sim p_u(\mathbf{c})}[\mathcal{L}_{\omega}(\mathbf{x}_u,\mathbf{y}_u,\mathbf{c}_u) - D_{\mathrm{KL}}[p_{\pi}(\mathbf{z}|\mathbf{c}_u)\|p_{\psi}(\mathbf{z}|\mathbf{c}_u)]]$$

$$\text{s.t.} \quad \mathbf{z} \sim p_{\pi}(\mathbf{z}|\mathbf{c}_u), \ \mathbf{x}_u, \mathbf{y}_u \sim p_{\theta}(\mathbf{x},\mathbf{y}|\mathbf{z},\mathbf{c}_u)$$

Here x, y, c, and z correspond to a question, an answer, a paragraph, and a latent variable, respectively. When applying Equation 3 to FIG. 1B, $q_{\pi}(\mathbf{z}|\mathbf{c})$ is a function used for the preprocessing 121 of the question-answer learning model, $p_{\pi}(\mathbf{z}|\mathbf{c})$ is a function used for the encoder 120, and $p_{\theta}(\mathbf{y}|\mathbf{z},\mathbf{c})$, $p_{\theta}(\mathbf{x}|\mathbf{z},\mathbf{y},\mathbf{c})$ are functions used for the answer decoder 140 and the question decoder 150, respectively. In addition, conditional variational autoencoder (CVAE) may be used as the question-answer learning model 170.

The encoder 120 samples the latent variable (**z**), and a question and a correct answer generated from the sampling need to increase a loss ($\mathcal{L}_{\omega}$) of the question-answer model. However, since there may be no relationship between the question and the correct answer generated as such, constraints are required in selecting **z.** That is, as **z** becomes distant from the previously learned distribution of **z** , an invalid question-answer pair is generated. Therefore, in order to prevent this problem, a value may be adjusted in such a manner that a penalty is given when a distance between the two distributions becomes distant (for example, using a KL divergence).

Therefore, the question-answer learning model according to an exemplary embodiment may generate a latent variable which is valid and in which the question-answer learning model cannot guess a correct answer by adjusting the loss 123 and the constraints 122.

In addition, performance of the question-answer earning model may be improved by performing adversarial machine learning using a dataset of an adversarial question and answer generated using the generated latent variable.

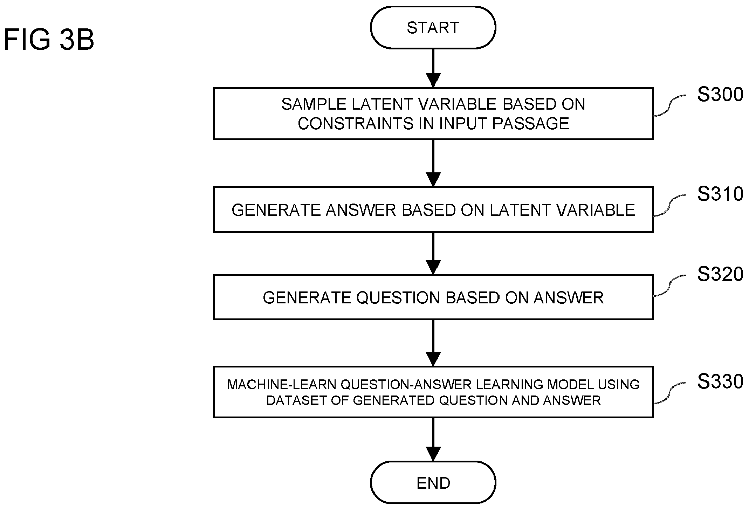

Referring to FIG 3B, a method of generating a question-answer learning model through adversarial learning samples a latent variable based on constraints in the input passage in step S300. Here, the constraints may be controlled so that the latent variable is present in a data manifold while increasing the loss of the question-answer learning model. For example, in order to perform adversarial learning on the generated question and the answer in the question-answer learning model, the loss ($\mathcal{L}_\omega$) needs to be increased. However, since there may be no relationship between the question and the correct answer generated as such, constraints are required in selecting the latent variable. That is, as the latent variable becomes distant from the previously learned distribution of the latent variable, an invalid question-answer pair is generated. Therefore, in order to prevent this problem, a value may be adjusted in such a manner that a penalty is given when a distance between the two distributions becomes distant.

Then, in step S310, an answer is generated based on the latent variable, and in step S320, a question is generated based on the answer. An operation of machine-learning the question-answer learning model is performed in step S330 using a dataset of the questions and answers generated by repeating step S310 and step S320.

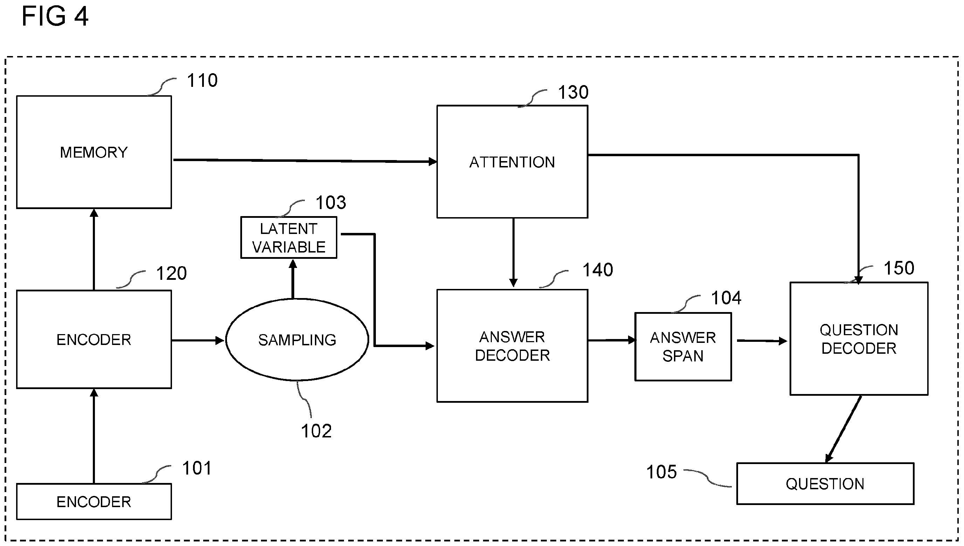

Meanwhile, a method of generating a question-answer dataset according to an exemplary embodiment will hereinafter be described in more detail with reference to FIGS. 4 to 7.

FIG. 4 is a conceptual diagram for schematically describing a question-answer dataset generating model based on a passage input according to an exemplary embodiment.

Referring to FIG. 4, a question-answer dataset generating model according to an exemplary embodiment may include a memory 110, an encoder 120, an attention 130, an answer decoder 140, and a question decoder 150.

According to the method of generating a question-answer dataset according to an exemplary embodiment, a passage 101 including several sentences is input to the encoder 120 as it is. Here, the passage 101 may include a phrase, a part, a paragraph, and the like.

The encoder 120 generates a hidden representation for each word in the input paragraph 101 and stores the hidden representation in the memory 110. Here, the encoder 120 may construct the hidden representation from an input through a neural network. Therefore, the hidden representation may mean a machine-readable data representation learned in a hidden layer of the neural network, and may be composed of a pair of keys and values. For example, the encoder 120 may store information about a meaning represented by a component (for example, a word) of a sentence as the hidden representation.

Next, the encoder 120 performs sampling 102 based on the hidden representation to generate a latent variable 103, and the generated latent variable 103 is input to the answer decoder 140.

The answer decoder 140 calculates the importance of each component of the memory 110 through the attention 130 that uses the latent variable 103 as a query to generate a weighted sum vector of the memory 110. For example, each time the answer decoder 140 predicts an output word through the attention 130, the answer decoder 140 may refer to an entire input sentence in the encoder 120 once again. However, the answer decoder 140 does not refer to the entire input sentence in the same ratio, but may attentively refer to an input word portion associated with a word to be predicted at a corresponding time. Therefore, an attention function obtains similarities to 'Keys' obtained from all the hidden representations with respect to given 'Queries'. In addition, the obtained similarities are reflected in the respective 'values' mapped to the keys. In addition, a weighted sum vector may be obtained by adding all the values in which the similarities are reflected.

The answer decoder 140 predicts an answer span 104 based on the weighted sum vector. Here, the answer span may mean a start point and an end point where an answer is positioned in the input passage.

Next, the question decoder 150 may receive the previously generated answer span 104, and perform calculation of the attention 130 of the memory 110 to finally generate the question 105.

A question-answer dataset composed of a pair of the generated question and an answer according to an exemplary embodiment may be stored in the memory 110, and the stored question-answer dataset may be used to machine-learn a question-answer learning model.

Therefore, the dataset generating model according to an exemplary embodiment automatically generates a dataset of a question and an answer from the input passage, and may thus sample several question-answer pairs with only one passage input, thereby constructing more diverse data as compared with an existing manual input model.

More specifically, the method for generating a question-answer dataset described above may be implemented through an objective function shown in the following Equation 4:

[Equation 4]

$$\mathcal{L}_{\theta,\phi,\psi}(\mathrm{x},\mathrm{y},\mathrm{c}) = \mathbb{E}_{\mathrm{x},\mathrm{y},\mathrm{c}\sim p(\mathrm{x},\mathrm{y},\mathrm{c})}\big[\mathbb{E}_{\mathrm{z}\sim q_{\phi}(\mathrm{z}|\mathrm{x},\mathrm{y},\mathrm{c})}\big[-logp_{\theta}(\mathrm{y}|\mathrm{z},\mathrm{c}) - logp_{\theta}(\mathrm{x}|\mathrm{z},\mathrm{y},\mathrm{c})\big]\big]$$
$$+ D_{\mathrm{KL}}[q_{\phi}(\mathrm{z})\|p_{\psi}(\mathrm{z})]$$

Here x, y, c, and z correspond to a question, an answer, a paragraph, and a latent variable, respectively. $q_{\phi}(z|x, y,c)$ is a function used for the encoder of the question-answer model, and $p_{\theta}(y|z,c)$, $p_{\theta}(x|z,y,c)$ are functions used for the answer decoder and the question decoder, respectively. $p_{\psi}(z)$ is a marginal prior distribution of the latent variables, and $q_{\phi}(z)$ is a marginal posterior distribution of the latent variables. For example, $q_{\phi}(z)$ may generate a distribution of latent variables generated from the input, and $p_{\psi}(z)$ may generate an output close to the input using latent variables. Meanwhile, since it is very difficult to calculate a Kullback-Leibler (KL) divergence for optimization (for reducing a difference between the two distributions described above), it may be approximated as represented by the following Equation 5:

[Equation 5]

$$q_{\phi}(\mathrm{z}) \approx \frac{1}{N}\sum_{n=1}^{N} q_{\phi}(\mathrm{z}|\mathrm{x}_n, \mathrm{y}_n, \mathrm{c}_n)$$

$$p_{\psi}(\mathrm{z}) \approx \frac{1}{N}\sum_{n=1}^{N} p_{\psi}(\mathrm{z}|\mathrm{c}_n)$$

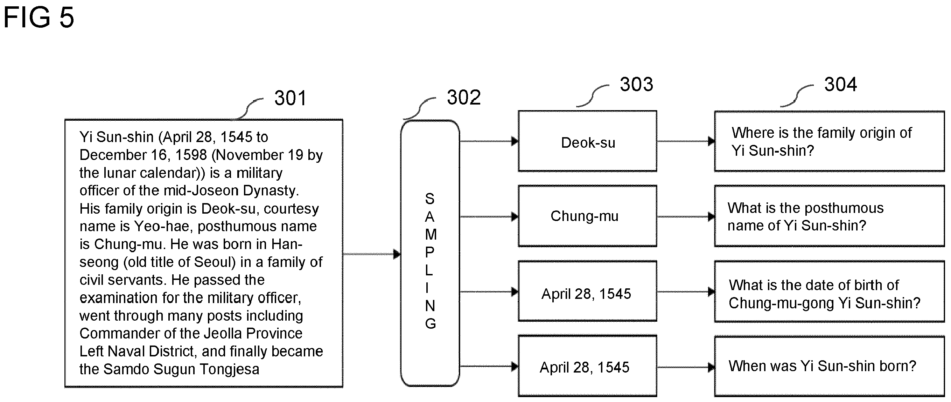

Meanwhile, how the passage input is performed and how a question-answer dataset construction model according to an exemplary embodiment may be utilized will be described with reference to FIGS. 5 to 7.

FIG. 5 is a view for describing an example of a method of generating a question-answer dataset in a paragraph according to an exemplary embodiment.

Referring to FIG. 3, when a paragraph 301 is input, an answer 303 is first generated through sampling 302. In addition, an answer 304 paired with the answer may be generated using the generated answer 303.

For example, in a case where there is a sentence "Yi Sun-shin (April 28, 1545 to December 16, 1598 (November 19 by the lunar calendar)) is a military officer of the mid-Joseon Dynasty" in an input passage, an answer "April 28, 1545" may be first generated through sampling. In addition, various types of questions such as "When was Admiral Yi Sun-shin's birthday?" Or "When was Yi Sun Shin born?" may be generated based on the answer generated according to the method for generating a question-answer dataset according to an exemplary embodiment. Therefore, in a case of using the question-answer generating model, various datasets for machine-learning the question-answer model may be constructed.

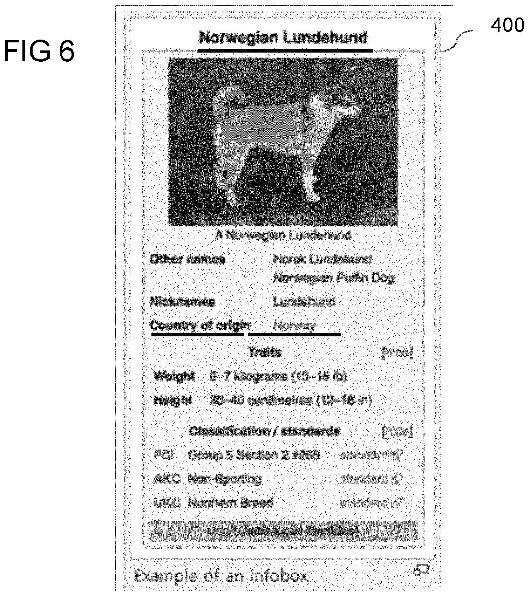

FIG. 6 is a view for describing a method of generating a question-answer dataset in a standardized infobox according to an exemplary embodiment.

Referring to FIG. 6, the question-answer dataset generating model according to an exemplary embodiment may obtain infobox data 400 through crawling from a website famous as an online knowledge encyclopedia website.

Particularly, since the infobox data 400 is standardized, the infobox data 400 may be easily structured in a form of a corpus of questions and answers, and since these knowledge encyclopedia websites provide detailed classification data for fields or targets, an input passage may be generated in a preprocessing step so as to generate and machine-learn a question-answer by targeting a desired field.

However, since all websites do not provide the standardized infobox data 400 as illustrated in FIG. 6, crawled data is generally non-standardized. Therefore, in this case, how to create a passage to be input will be described.

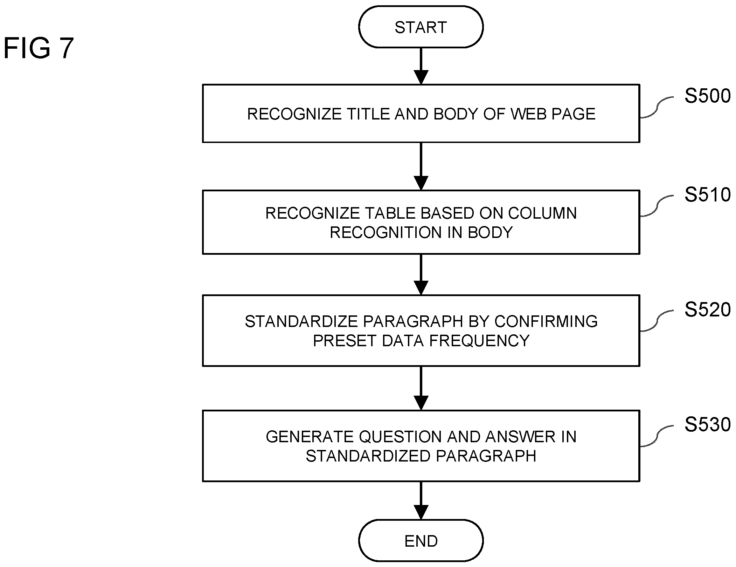

FIG. 7 is a flowchart for describing a method of generating a question-answer dataset in a non-standardized page according to an exemplary embodiment.

Referring to FIG. 7, in step S500, the question-answer dataset construction model recognizes the title and the body of a web page from crawled data. In addition, in step S510, a table is recognized based on column recognition in the body. That is, the table is recognized in order to obtain data having a form similar to an infobox that may be obtained from the standardized site.

Then, in step S520, a paragraph is standardized by confirming whether or not there is a word satisfying a preset data frequency. For example, words that appear repeatedly, such as "country name" and "capital" may be confirmed, and the paragraph may be standardized based on these words.

In step S530, the question-answer dataset generating model may receive the standardized paragraph and generate a question-answer dataset to construct a dataset of various questions and answers in a dataset provided in an information box provided in a standardized form or a dataset provided in a table form on an existing website.

The question-answer dataset generating model described above according to another exemplary embodiment may extract a question-answer dataset from data for which learning and machine translation is completed, evaluate accuracy of an answer corresponding to the question, and utilize an evaluation result to verify a quality of learning or translation, beyond simply generating the question-answer dataset.

For example, if the question-answer dataset generating model according to an exemplary embodiment can generate a correct question-answer dataset from the data for which the machine translation is completed, it may be evaluated that machine reading is well performed.

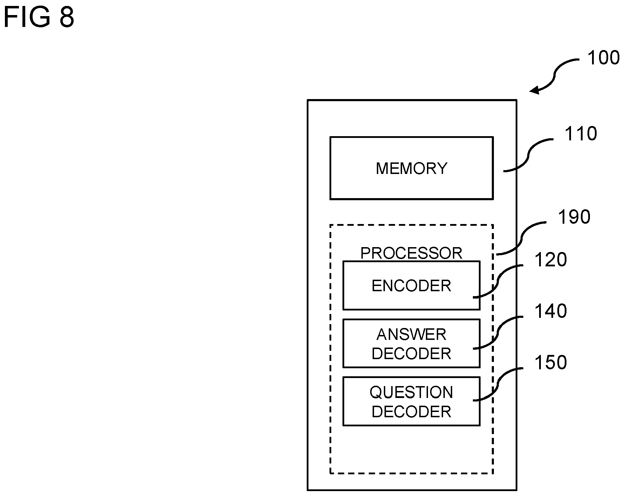

FIG. 8 is a block diagram schematically illustrating an internal configuration of an apparatus of generating a question-answer dataset according to an exemplary embodiment.

Referring to FIG. 8 an apparatus 100 of generating a question-answer dataset according to an exemplary embodiment may include one or more memories 110 and a processor 190. Operations of the apparatus 100 of generating a question-answer dataset may be performed by executing a program stored in the memory 110 through the processor 190.

The processor 190 according to an exemplary embodiment performs an operation of generating a hidden representation for each word in the input passage and storing the hidden representation in the memory 110.

In addition, the processor 190 samples a latent variable based on the hidden representation, and calculates the importance of the hidden representation stored in the memory through an attention that uses the sampled latent variable as a query to generate a weighted sum vector.

In addition, the processor 190 may perform an operation of generating an answer span based on the latent variable and the weighted sum vector and generating a question based on the generated answer span and the attention for the hidden representation in the memory.

In addition, the processor 190 may further perform an operation of storing a dataset of the generated question and an answer in the memory 110 and a machine learning operation of machine-learning a question-answer learning model using the stored dataset of the question and the answer.

In addition, the processor 19 may further perform an operation of generating a latent variable which is valid and in which the question-answer learning model cannot guess a correct answer by adjusting the loss of the question-answer learning model and the constraints and an operation of performing adversarial machine learning using the question-answer dataset generated using the generated latent variable.

Meanwhile, the apparatus 100 of generating a question-answer dataset described above may include one or more processors 190 and/or one or more memories 110. In addition, each of the processors 190 may include an encoder 120, an answer decoder 140, and a question decoder 150, and may perform the operations described above with reference to FIGS 1 to 7 on each of the encoder 120, answer decoder 150, and question decoder 150.

In addition, the memory 110 may include a volatile and/or nonvolatile memory. The one or more memories 110 may store instructions that, when executed by the one or more processors 190, cause the one or more processors 190 to perform an operation. In the present disclosure, the program or the instruction, which is software stored in the memory 110, may include an operating system for controlling resources of a server, an application, and/or middleware that provides various functions to the application so that the application may utilize the resources of the apparatus.

The one or more processors 190 may drive software (for example, programs, instructions) to control at least one component of the apparatus 100 connected to the processors 190. In addition, the processor 190 may perform operations such as various operations, processing, data generation, and processing related to the present disclosure. In addition, the processor 190 may load data or the like from the memory 110 or store the data or the like in the memory 110.

In an exemplary embodiment, at least one of the components of the apparatus 100 may be omitted or another component may be added. Additionally or alternatively, some of the components may be implemented in an integrated form or be implemented as singular or plural entities.

Meanwhile, the steps of the method or the algorithm described in connection with an exemplary embodiment of the present invention may be implemented directly by hardware, by a software module executed by hardware, or by a combination of hardware and software. The software module may reside on a random access memory (RAM), a read only memory (ROM), an erasable programmable ROM (EPROM), an electrically erasable programmable ROM (EEPROM), a flash memory, a hard disk, a removable disk, a compact disk (CD)-ROM, or may reside on any type of computer extractable recording medium well-known in the art.

According to an exemplary embodiment of the present invention, a question-answer dataset for learning of a QA model is automatically generated from any context, and several question-answer pairs may thus be sampled with only one passage input, thereby constructing more diverse data as compared with an existing model. In addition, performance of a question-answer learning model may be improved by machine-learning the data constructed as described above.

Effects of the present invention are not limited to the effects described above, and other effects that are not mentioned may be obviously understood by those skilled in the art from the following description.

Although the exemplary embodiments of the present invention have been described with reference to the accompanying drawings, those skilled in the art will understand that various modifications and alterations may be made without departing from the spirit or essential feature of the present invention. Therefore, it is to be understood that the exemplary embodiments described hereinabove are illustrative rather than being restrictive in all aspects.

**Claims**

1. A method of operating a question-answer model through reinforcement learning in an apparatus of generating an answer to a question, comprising:

   sampling a latent variable from any passage by a first agent;
   extracting a question-answer dataset from the passage based on the latent variable;
   determining whether or not to apply the extracted question-answer dataset to learning of a question-answer model generating an answer to any question by a second agent; and
   applying a change value of performance of the question-answer model as a reward to the first agent and the second agent.

2. The method of claim 1, wherein the sampling of the latent variable comprises:

   generating a hidden representation for each word in the passage and storing the hidden representation in a memory; and
   sampling the latent variable based on the hidden representation.

3. The method of any of the preceding claims, wherein the extracting of the question-answer dataset comprises:

   calculating importance of the hidden representation stored in the memory through an attention that uses the sampled latent variable as a query to generate a weighted sum vector; and
   generating an answer span based on the latent variable and the weighted sum vector.

4. A method of operating a question-answer learning model through adversarial learning in an apparatus of generating an answer to a question, comprising:

   sampling a latent variable based on constraints in any passage;
   generating an answer based on the latent variable;
   generating a question based on the answer; and
   machine-learning the question-answer learning model using a dataset of the generated question and answer, wherein the constraints are controlled so that the latent variable is present in a data manifold while increasing a loss of the question-answer learning model.

5. The method of claim 4, wherein the sampling of the latent variable comprises:

   generating a hidden representation for each word in the passage and storing the hidden representation in a memory; and
   sampling the latent variable based on the hidden representation.

6. The method of any of claims 4 or 5, wherein the generating of the answer comprises:

   calculating importance of the hidden representation stored in the memory through an attention that uses the sampled latent variable as a query to generate a weighted sum vector; and
   generating an answer span based on the latent variable and the weighted sum vector.

7. The method of any of the preceding claims, wherein
   the input passage

is generated by structuring infobox data extracted from data crawled from a website.

8. The method of claim 7, wherein
in a case where the infobox data is not extracted from the crawled data, a paragraph standardized based on a data frequency in a table recognized through column recognition is input as the passage.

9. The method of any of claims 4 to 8, wherein
the passage is data for which machine translation is completed,
the method further comprising evaluating a quality of the machine translation by evaluating accuracy of an answer based on a dataset of the generated question and the answer.

10. An apparatus of generating a question-answer dataset, comprising:

    one or more processors; and
    one or more memories in which instructions, when executed by the one or more processors, causing the one or more processors to perform an operation are stored,
    wherein the operation performed by the one or more processors includes:

       an operation of sampling a latent variable based on constraints in an input passage;
       an operation of generating an answer based on the latent variable;
       an operation of generating a question based on the answer; and
       an operation of machine-learning the question-answer learning model using a dataset of the generated question and answer,

    the constraints being controlled so that the latent variable is present in a data manifold while increasing a loss of the question-answer learning model.

11. A program for generating a question-answer learning model through adversarial learning, stored in a medium in order to execute the method of any one of claims 1 to 6 in combination with a computer as hardware.

# FIG 1A

**100**

PASSAGE — 101

agent — 122
$\pi_{\psi}(\mathbf{z}|\mathbf{c})$

$\mathbf{z}$

LATENT
VARIABLE
(103)

DECODER — 140

Q, A pair

agent — 160
$\pi_{\omega}(\mathbf{k}|\mathbf{c}, \mathbf{x}, \mathbf{y})$

Filtering
Q, A pair

QA
MODEL — 170

Reward

Reward

# FIG 1B

EP 3 846 088 A1

# FIG 2

QUESTION-ANSWER
DECISION BOUNDARY

ACTUAL QUESTION-
ANSWER BOUNDARY

$(x_{11}, y_1)$

$(x_{21}, y_2)$

LOSS

$(x_{12}, y_1)$

$(x_{22}, y_2)$

$(x_{13}, y_1)$

$Y_1'$ MANIFOLD

$Y_2'$ MANIFOLD

GENERATED
QUESTION-ANSWER
LEARNING MODEL
$(X_1', Y_1')$

# FIG 3A

START

SAMPLE LATENT VARIABLE FROM INPUT PASSAGE — S310

GENERATE QUESTION-ANSWER DATASET BASED ON LATENT VARIABLE — S320

DETERMINE WHETHER OR NOT TO APPLY GENERATED QUESTION-ANSWER DATASET TO QA MODEL — S330

MACHINE-LEARN QA MODEL USING DATASET FOR QUESTION-ANSWER PAIR — S340

MEASURE PERFORMANCE OF UPDATED QA MODEL — S350

APPLY REWARD — S360

END

EP 3 846 088 A1

FIG 3B

```
           ┌──────────┐
           │  START   │
           └────┬─────┘
                │
                ▼
┌────────────────────────────────────────┐
│   SAMPLE LATENT VARIABLE BASED ON       │  ─── S300
│     CONSTRAINTS IN INPUT PASSAGE        │
└────────────────┬───────────────────────┘
                 │
                 ▼
┌────────────────────────────────────────┐
│ GENERATE ANSWER BASED ON LATENT VARIABLE│  ─── S310
└────────────────┬───────────────────────┘
                 │
                 ▼
┌────────────────────────────────────────┐
│   GENERATE QUESTION BASED ON ANSWER     │  ─── S320
└────────────────┬───────────────────────┘
                 │
                 ▼
┌────────────────────────────────────────┐
│ MACHINE-LEARN QUESTION-ANSWER LEARNING  │  ─── S330
│  MODEL USING DATASET OF GENERATED       │
│        QUESTION AND ANSWER              │
└────────────────┬───────────────────────┘
                 │
                 ▼
           ┌──────────┐
           │   END    │
           └──────────┘
```

FIG 4

EP 3 846 088 A1

# FIG 5

301

Yi Sun-shin (April 28, 1545 to December 16, 1598 (November 19 by the lunar calendar)) is a military officer of the mid-Joseon Dynasty. His family origin is Deok-su, courtesy name is Yeo-hae, posthumous name is Chung-mu. He was born in Han-seong (old title of Seoul) in a family of civil servants. He passed the examination for the military officer, went through many posts including Commander of the Jeolla Province Left Naval District, and finally became the Samdo Sugun Tongjesa

302

SAMPLING

303

Deok-su

Chung-mu

April 28, 1545

April 28, 1545

304

Where is the family origin of Yi Sun-shin?

What is the posthumous name of Yi Sun-shin?

What is the date of birth of Chung-mu-gong Yi Sun-shin?

When was Yi Sun-shin born?

FIG 6

400

**Norwegian Lundehund**

A Norwegian Lundehund

| Other names | Norsk Lundehund |
| | Norwegian Puffin Dog |
| Nicknames | Lundehund |
| Country of origin | Norway |

**Traits** [hide]

| Weight | 6–7 kilograms (13–15 lb) |
| Height | 30–40 centimetres (12–16 in) |

**Classification / standards** [hide]

| FCI | Group 5 Section 2 #265 | standard |
| AKC | Non-Sporting | standard |
| UKC | Northern Breed | standard |

Dog (Canis lupus familiaris)

Example of an infobox

FIG 7

START

RECOGNIZE TITLE AND BODY OF WEB PAGE — S500

RECOGNIZE TABLE BASED ON COLUMN RECOGNITION IN BODY — S510

STANDARDIZE PARAGRAPH BY CONFIRMING PRESET DATA FREQUENCY — S520

GENERATE QUESTION AND ANSWER IN STANDARDIZED PARAGRAPH — S530

END

# FIG 8

Europäisches
Patentamt

European
Patent Office

Office européen
des brevets

**EUROPEAN SEARCH REPORT**

Application Number

EP 19 22 0064

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PREKSHA NEMA ET AL: "Let's Ask Again: Refine Network for Automatic Question Generation", ARXIV.ORG, CORNELL UNIVERSITY LIBRARY, 201 OLIN LIBRARY CORNELL UNIVERSITY ITHACA, NY 14853, 31 August 2019 (2019-08-31), XP081472962, | 1-3,11 | INV.<br>G06N5/02<br>G06N20/00<br>G06N3/02<br>G06N3/08<br>G06F16/951<br>G06F40/143 |
| A | * abstract *<br>* sections 1, 2, 2.1, 2.2 * | 4-10 | G06F40/30<br>G06F40/51<br>G06N3/04 |
| X | VISHWAJEET KUMAR ET AL: "Putting the Horse Before the Cart:A Generator-Evaluator Framework for Question Generation from Text", ARXIV.ORG, CORNELL UNIVERSITY LIBRARY, 201 OLIN LIBRARY CORNELL UNIVERSITY ITHACA, NY 14853, 15 August 2018 (2018-08-15), XP081491542, | 1-3,11 | G06N3/00 |
| A | * abstract *<br>* sections 1, 2, 2.1, 2.2 * | 4-10 | |
| X | SUN YIBO ET AL: "Joint Learning of Question Answering and Question Generation", IEEE TRANSACTIONS ON KNOWLEDGE AND DATA ENGINEERING, IEEE SERVICE CENTER, LOS ALAMITOS, CA, US, vol. 32, no. 5, 5 February 2019 (2019-02-05), pages 971-982, XP011781286, ISSN: 1041-4347, DOI: 10.1109/TKDE.2019.2897773 [retrieved on 2020-04-01] | 4-11 | |
| A | * the whole document * | 1-3 | |

-/--

**TECHNICAL FIELDS SEARCHED (IPC)**

G06N
G06F

The present search report has been drawn up for all claims

| Place of search | Date of completion of the search | Examiner |
|---|---|---|
| The Hague | 9 October 2020 | Papadakis, Georgios |

EPO FORM 1503 03.82 (P04C01)

page 1 of 2

Europäisches
Patentamt

European
Patent Office

Office européen
des brevets

**EUROPEAN SEARCH REPORT**

Application Number

EP 19 22 0064

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SHUFEI ZHANG ET AL: "Manifold Adversarial Learning", ARXIV.ORG, CORNELL UNIVERSITY LIBRARY, 201 OLIN LIBRARY CORNELL UNIVERSITY ITHACA, NY 14853, 16 July 2018 (2018-07-16), XP081248886, * abstract * | 4 | |

-----

TECHNICAL FIELDS
SEARCHED      (IPC)

The present search report has been drawn up for all claims

| Place of search | Date of completion of the search | Examiner |
|---|---|---|
| The Hague | 9 October 2020 | Papadakis, Georgios |

EPO FORM 1503 03.82 (P04C01)

page 2 of 2

Europäisches
Patentamt

European
Patent Office

Office européen
des brevets

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

| | | |
|---|---|---|
| Europäisches Patentamt<br>European Patent Office<br>Office européen des brevets | **LACK OF UNITY OF INVENTION**<br>**SHEET B** | Application Number<br>EP 19 22 0064 |

The Search Division considers that the present European patent application does not comply with the requirements of unity of invention and relates to several inventions or groups of inventions, namely:

1. claims: 1-3

    Improved answer extraction encoder model an use of the generated question-answer dataset using reinforcement learning

    ---

2. claims: 4-11

    Training and containing the model using adversarial learning

    ---